**Europäisches Patentamt**

**European Patent Office**

**Office européen des brevets**

(19)

(11) Numéro de publication : **0 493 224 A1**

(12)                    # DEMANDE DE BREVET EUROPEEN

(21) Numéro de dépôt : **91403488.9**

(22) Date de dépôt : **20.12.91**

(51) Int. Cl.⁵ : **F16B 43/00**

(30) Priorité : **20.12.90 FR 9015986**

(43) Date de publication de la demande :
**01.07.92 Bulletin 92/27**

(84) Etats contractants désignés :
**BE DE ES**

(71) Demandeur : **REGIE NATIONALE DES USINES RENAULT S.A.**
**34, Quai du Point du Jour**
**F-92109 Boulogne Billancourt (FR)**

(72) Inventeur : **Lasne, Roland**
**11, Avenue Gounod**
**F-78290 Croissy sur Seine (FR)**
Inventeur : **Matrat, Eric**
**9, Allée Claude Monet**
**F-94450 Limeil Brevannes (FR)**

(74) Mandataire : **Ernst-Schonberg, Michel et al**
**REGIE NATIONALE DES USINES RENAULT**
**SA, Sce 0267, 860, quai de Stalingrad**
**F-92109 Boulogne Billancourt Cédex (FR)**

(54) **Etrier pour assemblage par vis et assemblage utilisant un tel étrier.**

(57)    Etrier destiné à l'assemblage par vis d'une pièce percée (2) sur un support (3), se composant d'une plaquette percée d'un trou central (13) pour le passage de la vis (4), caractérisé par le fait qu'il comporte au moins une patte d'arrêt (11) orientée vers le haut, du côté de la face (16) servant au contact avec la pièce (2) pour empêcher la rotation de celle-ci et au moins deux pattes de centrage et/ou de blocage en rotation (14, 15) orientées vers le bas, du côté de la face (17) servant au contact avec le support (3).

Fig. 1

EP 0 493 224 A1

La présente invention se rapporte d'une part à un étrier se composant d'une plaquette percée d'un trou central et destiné à l'assemblage par vis d'une pièce percée sur un support et d'autre part à un assemblage utilisant un tel étrier. Cet étrier est adapté notamment à l'immobilisation de cosses de liaison électrique pendant l'assemblage par vis.

Certaines pièces telles que des cosses de fils électriques sont assemblées sur un support par une vis d'assemblage. Lors du serrage opéré par la vis, celle-ci tend à faire tourner la pièce à assembler du fait des efforts de frottement.

L'invention a pour but de fournir un étrier d'immobilisation en rotation de la pièce à assembler pour un assemblage par vis.

L'étrier selon l'invention comporte au moins une saillie d'arrêt orientée vers le haut , pour empêcher la rotation de la pièce et des moyens pour centrer et bloquer en rotation ledit étrier par rapport au support.

Selon une caractéristique, l'étrier de forme générale rectangulaire présente ,sur deux bords opposés, deux pattes de centrage élastiques orientées vers le bas pour assurer un clipsage de la plaquette sur le support et sur les deux autres bords opposés, deux pattes de blocage orientées vers le bas.

Selon une autre caractéristique, l'étrier comporte quatre pattes d'arrêt disposées aux quatre coins de la plaquette , en saillie par rapport à la face de contact avec la pièce.

Selon une caractéristique,les moyens pour centrer et bloquer en rotation l'étrier sont constitués par le trou central réalisé de forme prismatique, ce trou coopérant avec le support conjugué, lui-même de forme prismatique.

L'invention va maintenant être décrite avec plus de détail en se référant à un mode de réalisation donné à titre d'exemple et représenté par les dessins annexés sur lesquels:

– la figure 1 est une vue en élevation d'un premier mode de réalisation de l'étrier selon l'invention;

– la figure 2 est une vue de gauche de la figure 1;

– la figure 3 est une vue de dessus de l'étrier des figures 1 et 2;

– la figure 4 est une vue de l'étrier monté;

– la figure 5 est une vue en élevation d'un second mode de réalisation de l'étrier, représenté en position de montage;

– la figure 6 est une vue de dessus de la figure 5;

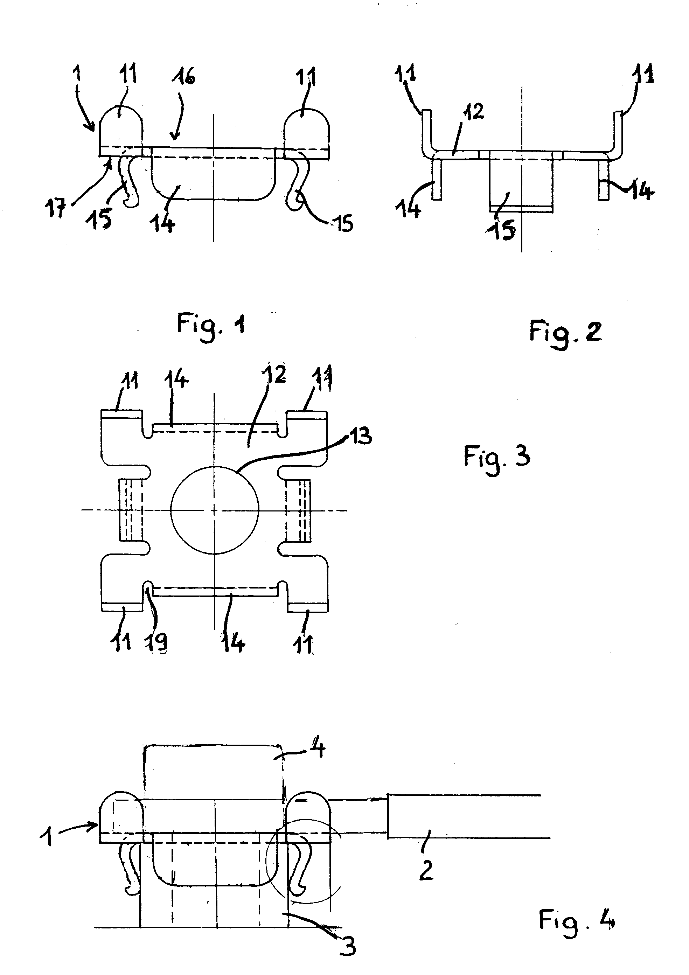

Dans le mode de réalisation des figures 1 à 4, l'étrier 1 a une forme générale rectangulaire. Il comprend une plaquette 12 percée en son centre par un trou 13. Ce trou central permet le passage d'une vis de serrage. La face supérieure 16 de la plaquette est destinée à venir au contact de la pièce à assembler repérée 2 sur la figure 4. La face inférieure 17 est destinée à venir au contact d'un support 3.

L'étrier présente vers le haut quatre saillies ou pattes d'arrêt en rotation 11. Ces pattes 11 sont disposées du côté de la face supérieure 16 destinée à être en contact avec la pièce à assembler. Elles sont situées sensiblement aux coins de la plaquette de manière à laisser quatre dégagements permettant le passage de la pièce à assembler.

L'étrier comporte également deux pattes de blocage en rotation 14 disposées vers le bas c'est à dire du côté de la face 17 destinée à venir en contact avec le support 3 ,sur deux bords opposés. Il comporte également deux pattes de centrage 15 disposées vers le bas sur les deux autres bords opposés.

Chacune des pattes de blocage 14 est située entre deux pattes d'arrêt 11 dont elle est séparée par des échancrures 19.

Les pattes de centrage 15 sont élastiques et assurent un clipsage de l'étrier sur le support 3. Les extrémités inférieures de ces pattes sont évasées de manière à permettre l'engagement sur le support.

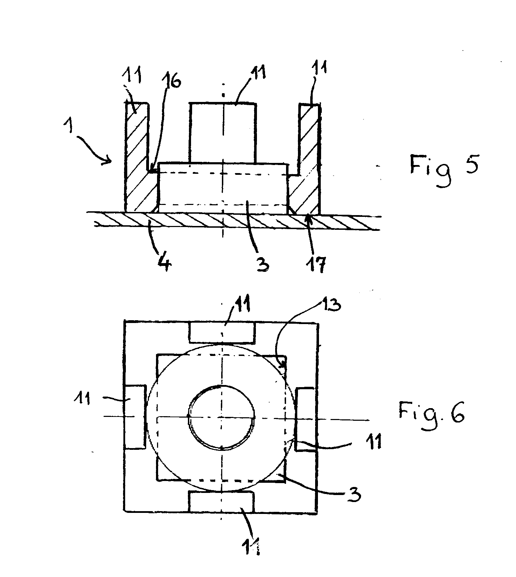

Dans le mode de réalisation des figures 5 et 6, l'étrier 1 comprend une plaquette 12 percée en son centre par un trou 13 . La face supérieure de la plaquette est repérée 16. La face inférieure 17 est destinée à venir au contact d'une embase 4 solidaire du support 3.

L'étrier présente vers le haut quatre saillies ou pattes d'arrêt en rotation 11. Ces pattes 11 sont orientées du côté de la face supérieure 16.

Le trou central est de forme carrée. Il est ajusté à la forme et aux dimensions du support 3. Il permet d'emboîter l'étrier sur le support 3.

Au moment de l'assemblage, l'étrier est clipsé (figure 1 à 5) ou engagé (figures 6 et 7) sur le support 3 en forme de carré. La pièce 2 (cosse de masse par exemple) est positionnée au dessus de l'étrier de manière à s'étendre entre deux pattes d'arrêt. La vis de serrage 4 est introduite dans le trou de la pièce et de l'étrier et est vissée dans le support 3. Les pattes d'arrêt 11 et de centrage et arrêt 14 et 15 empêchent la rotation de la pièce lors du serrage.

**Revendications**

1) Etrier (1) d'assemblage par vis d'une pièce percée (2) sur un support (3), se composant d'une plaquette (12) percée d'un trou central (13) portant au moins une saillie d'arrêt (11) orientée pour empêcher la rotation de la pièce (2) et des moyens (14) pour centrer et bloquer en rotation ledit étrier (1) par rapport au support (3), caractérisé par le fait que l'étrier a une forme générale rectangulaire et présente sur deux bords opposés, deux pattes de centrage élastiques (15) orientées vers le bas pour assurer un clipsage de la plaquette (12) sur le support (3) et, deux pattes de blocage en rotation (14) orientées vers le bas situées sur les deux autres bords opposés.

2) Etrier selon la revendication 1, caractérisé par le fait qu'il comporte quatre pattes d'arrêt (11) disposées aux quatre coins de la plaquette, en saillie par rapport à la face de contact avec la pièce.

**3)** Etrier selon la revendication 1, caractérisé par le fait que les moyens pour centrer et bloquer en rotation l'étrier sont constitués par le trou central réalisé de forme prismatique, ce trou coopérant avec le support conjugué lui-même de forme prismatique.

**4)** Application de l'étrier selon l'une quelconque des revendications 1 à 3 à un assemblage d'une pièce percée (2) sur un support (3) par une vis (4), l'étrier étant enserré entre la pièce et le support.

Fig. 1

Fig. 2

Fig. 3

Fig. 4

Fig 5

Fig. 6

EP 0 493 224 A1

## Office européen des brevets

## RAPPORT DE RECHERCHE EUROPEENNE

Numero de la demande

EP    91 40 3488

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-1 175 110 (TELEFONBAU UND NORMALZEIT) <br> * page 1, colonne de gauche, ligne 39 - page 1, colonne de droite, ligne 31; figure 1 * <br> --- | 1 | F16B43/00 |
| A | EP-A-0 195 576 (RITTAL-WERK) <br> * page 4, ligne 3 - ligne 8; figure 1 * <br><br> ----- | 1,4 | |

DOMAINES TECHNIQUES RECHERCHES (Int. Cl.5 )

F16B

Le présent rapport a été établi pour toutes les revendications

| Lieu de la recherche | Date d'achèvement de la recherche | Examinateur |
|---|---|---|
| BERLIN | 09 MARS 1992 | WESTERMAYER W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EP O FORM 1503 03.82 (P0402)

6